# EUROPEAN PATENT SPECIFICATION

(11) **EP 2 090 205 B1**
(45) Date of publication and mention of the grant of the patent: **23.03.2011**
(21) Application number: 08164798.4
(22) Date of filing: 22.09.2008
(51) Int. Cl.: A47J 31/46

(54) **Dispensing unit**
Ausgabeeinheit
Unité de distribution

(30) Priority: 13.02.2008 IT BS20080034
(43) Date of publication of application: 19.08.2009
(73) Proprietor: Capitani S.r.l., 22070 Solbiate (CO) (IT)
(72) Inventor: Capitani, Emilio, I-22070, Albiolo, COMO (IT)
(74) Representative: Pulieri, Gianluca Antonio

(56) References cited:
- WO-A-03/105644
- WO-A-2006/032597
- CH-A5- 668 543
- DE-U1-202004 014 061

## Description

The present invention relates to a dispensing unit, for example for coffee machines of the type using pods or capsules containing aromatic extracts.

Dispensing units are known of in the art for the production under pressure of aromatic drinks e.g. from Document CH-A-668543, such as coffee, comprising valve members which control the pressure inside an infusion chamber. Such chamber usually houses a pod containing the aromatic extract.

Such members are movable between a closed configuration, below a pre-set pressure value, suitable for preventing the transit of the infused drink through an exit pipe, and an open configuration, above such pre-set pressure value, wherein they allow the dispensing of the infused drink through the exit pipe.

However, the state of the art, has a series of drawbacks.

Specifically, the ratio between the dimensions of the exit pipe and that of the machine dispensing nozzle encourages the formation and development of air bubbles in the flow of the dispensed infused drink, reducing its creaminess and aroma.

Therefore, the present invention sets out to resolve the drawbacks of the state of the art, and specifically, those mentioned above.

Such objective is achieved by means of a dispensing unit according to claim 1.

Further advantages may be achieved with the supplemental features of the dependent claims.

The object of the present invention will now be described in detail with the help of the attached tables, wherein:

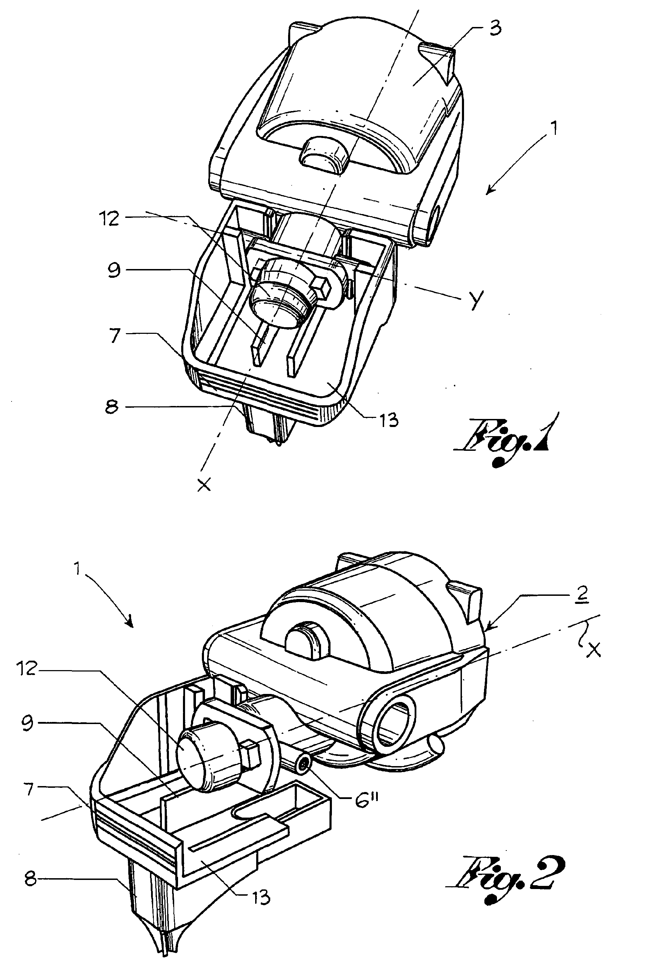

- figures 1 and 2 show two perspective views, partially in cross-section, of the unit of the present invention, according to a possible embodiment;

- figure 3 shows a view from above of the unit of figure 1;

- figures 4 and 5 show two longitudinal cross-sections, along the plane IV-IV, of the unit of figure 3, respectively during the infusion and dispensing phases;

- figure 6 shows a longitudinal cross-section along the plane IV-IV of the unit of figure 3, wherein the valve control member of the unit has been omitted.

With reference to the aforesaid tables, reference numeral 1 globally indicates a dispensing unit, for example for a coffee machine of the type functioning with pods or capsules containing aromatic extracts.

The dispensing unit 1 comprises an infusion chamber 2, which is defined by a female infuser 3 and a male infuser. Such chamber 2 is suitable for accommodating a pod for the production under pressure of an infused drink.

The unit 1 also comprises at least one exit pipe for the infused drink from the infusion chamber 2, having a main extension X. For merely illustrative purposes, the main extension X shown in the figures is horizontal.

According to possible variations, the exit pipe is joined to the female infuser 3 (as shown for example in the mentioned figures), or may be joined to the male infuser (not shown).

The exit pipe comprises a first portion 4', in fluidic communication with the infusion chamber 2, and a second portion 4", downstream of the first portion 4' in relation to the flow direction of the infused drink, in fluidic communication with a dispensing nozzle 8 of the drink.

According to a preferred embodiment, the passage section of the first portion 4' is smaller than that of the second portion 4".

The unit 1 also comprises a valve control member for the dispensing of the infused drink, joined to the exit pipe.

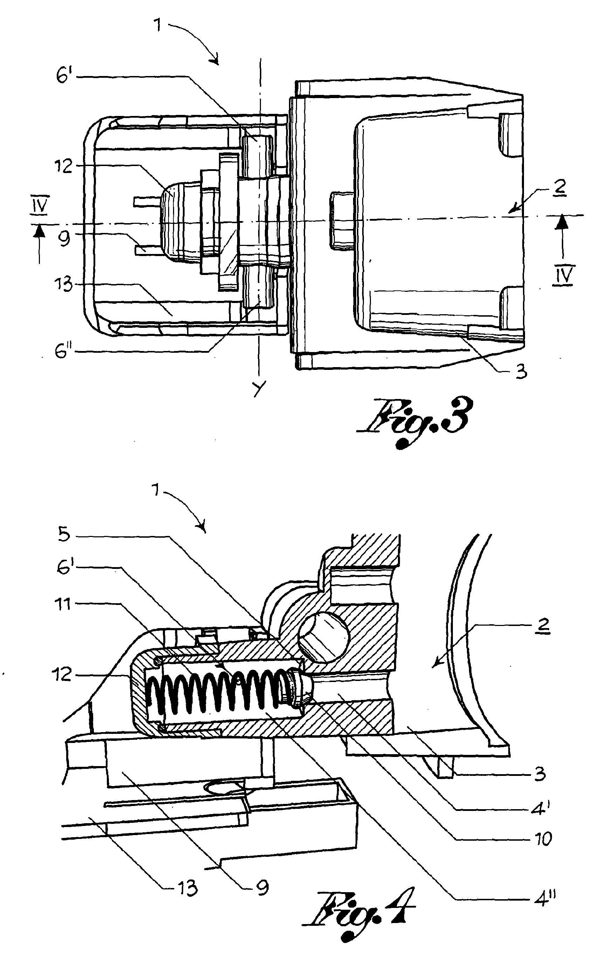

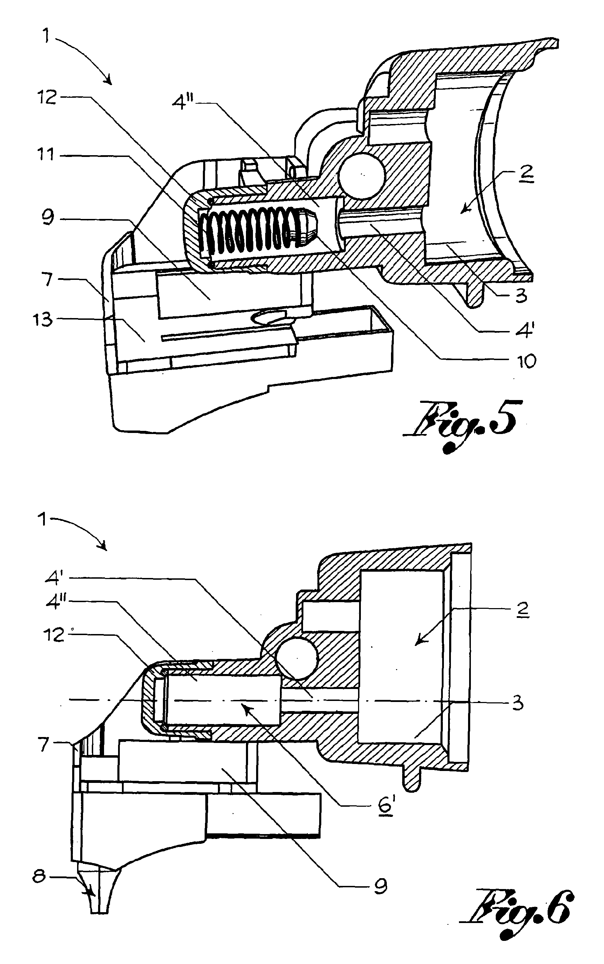

Such valve member is movable between a forward closed position, wherein it prevents the flow of the infused drink from the infusion chamber 2 below a pre-set pressure value (as for example illustrated in figure 4), and a rearward open position, wherein it enables the passage of the drink from the first 4' to the second portion 4", above the pre-set pressure value (as for example illustrated in figure 5).

In other words, the valve member is sensitive to the pressure present in the infusion chamber 2, which is the same present in the first portion 4' of the exit pipe. In fact, when the pressure is lower than a pre-set value, for example when the pod is subjected to infusion, the valve member allows the passage of the drink in the first portion 4', but prevents the fluidic communication of the latter with the second portion 4". However, when the pressure exceeds the pre-set pressure value, for example during the dispensing phase of the drink, the valve member moves into the rearward open position in order to allow fluidic connection and, as a result, the passage of the infused drink between the first 4' and the second portion 4".

In still other words, the best organoleptic yield of the drink is achieved at pre-set pressure values, comprised in a narrow range of values, so that the valve member only allows dispensing of the drink after this pressure has been reached, and always in a highly reproducible manner.

Furthermore, the unit comprises at least a pair of ramifications 6', 6" suitable for dividing the flow of infused drink coming from the infusion chamber 2 and extending from the second portion (4").

In other words, above the pre-set pressure, the flow of the infused drink coming from the infusion chamber 2 initially passes through the first portion 4' of the exit pipe, having a first passage section, subsequently in its second portion 4", having a bigger section than the first 4', to then divide inside the ramifications 6', 6", having smaller sections than the first 4' and the second portion 4".

This way, passing the infused drink through a series of pipes of variable cross-sections, the formation of air bubbles is considerably reduced.

In fact, preferably, the passage section of each ramification 6', 6" is about half of the cross-section of the first portion 4' and, even more preferably, the passage section of the first portion 4' is about half of the section of the second portion 4".

Consequently, the infused drink coming from the infusion chamber 2 enters the first portion 4' at a first speed. When the drink flows into the second portion 4", the cross-section of the pipe increases and the speed of the flow decreases. Lastly, on entering the ramifications the passage section reduces drastically, for example to about a quarter of the second portion, and the speed increases significantly, helping to reduce the air bubbles in the drink flow.

Furthermore, with the aforesaid disposition, the quantity of boiling drink flow hitting the valve member is limited, helping to preserve its functioning and ensuring that in each new drink dispensed no remains of the previously dispensed drink remain.

Preferably, the ramifications 6', 6" are positioned in diametrically opposed positions to the main extension X.

According to a further variation, the ramifications 6', 6" have secondary extensions Y distanced angularly in relation to the main extension X and incident to it, preferably in an essentially orthogonal manner.

According to the invention the pair of ramifications 6', 6" extend from the second portion 4" upstream of the valve member, when the latter is in the rearward open position.

In other words, when the valve member is in the rearward open position, the pair of ramifications 6', 6" breaks off from the second portion 4" at a smaller depth of the exit pipe than the limit depth reached by the valve member.

According to a preferred embodiment, the dispensing unit 1 further comprises an oxygenation hopper 7, which receives the infused drink from the ramifications 6', 6" and is shaped in such a way as to slow down the flow speed of the infused drink in order to oxygenate it.

In other words, the infused drink coming from the ramifications, which already has a small quantity of air bubbles, is further decanted to make the dispensed drink creamier.

Preferably, the hopper 7 is positioned on a plane essentially orthogonal to the passage section along the main extension X and below it, in such a way as to receive the infused drink by gravity.

Even more preferably, the hopper 7 has at least one separator 9 suitable for conducting the infused drink along a winding path before feeding it to the dispensing nozzle 8.

Advantageously, the hopper 7 has a number of separators 9 at least equal to the number of ramifications 6', 6".

In the embodiments shown, the separators 9 are composed of vertical walls, which extend from the horizontal collection surface 13 of the infused drink.

According to possible variations, such walls may be rectilinear like those illustrated, or form at least one loop, or a number of loops, to further reduce the flow speed of the infused drink.

According to an advantageous embodiment, the valve member is mobile inside a housing co-axial to the first portion 4' and, specifically, moves along the main extension X.

According to a preferred embodiment, the passage section of the first portion 4' is smaller than that of the second portion 4" and the valve member comprises a cut-off 10 suitable for engaging at least partially the first portion 4', when the valve member is positioned in the forward closed position.

According to a possible variation, the cut-off 10 is made of a polymer material, preferably resistant to high temperatures and/or pressure of the infused drink.

Preferably, the valve member comprises a cut-off 10, and the first 4' and second portion 4" are separated by a surface essentially orthogonal to the main extension X. This surface comprises a valve seat 5 against which, below the pre-set pressure value, the cut-off 10 goes in abutment.

According to possible embodiments, the cut-off 10 has an essentially truncated-cone or hemispherical-shaped contact surface with the valve seat 5.

According to a preferred variation, the valve member comprises elastic return means, e.g. a spring 11, acting against the pressure of the infusion chamber 2.

This way, a simple construction method ensures that as soon as the pressure in the infusion chamber falls below the pre-set value, the elastic return means push the cut-off 10 against the valve seat 5, interrupting the fluidic communication between the first 4' and the second portion 4".

According to an advantageous embodiment, the extremity of the elastic return means opposite the cut-off 10 rests on a back plate 12 which closes in a removable manner the seat wherein the valve member moves.

For example, the back plate 12 is screwed to the infuser body in such a way as to be easily unscrewed both for ordinary maintenance purposes and to replace the elastic return means with others having greater or smaller elasticity constants depending on the pre-set pressure value desired.

Preferably, the seat wherein the valve member moves and the exit pipe are one-piece with the female infuser 3 or with the male infuser.

Innovatively, the dispensing unit of the present invention limits the presence of bubbles in the infused drink, in such a way as to make it creamier with an improved aroma.

Advantageously, the dispensing unit of the present invention allows to maintain an optimal functioning state of the valve members, as the seat which they move within is not traversed by the boiling infused drink.

Advantageously, the dispensing unit of the present invention allows to work at higher pressures than the known appliances, as the infuser, the valve seat and the exit pipe are one-pieced and, consequently, it is impossible that there could be leaks from the sealing elements between them, given that such elements are missing.

Advantageously, the dispensing unit of the present invention allows to easily replace the elastic return means, for example in the event that the organoleptic yield of the infused drink is not acceptable and higher pre-set functioning pressures are deemed necessary.

Advantageously, the dispensing unit of the present invention allows to perform rapid maintenance operations given that the use of special tools or instruments to dismount it is not required.

## Claims

1. Dispersing unit (1), for example for coffee machines of the type using pods or capsules containing aromatic extracts, comprising:
- an infusion chamber (2), defined by a female infuser. (3) and by a male infuser and suitable for accommodating a pod for the production under pressure of an infused drink;
- at least one exit pipe for the infused drink from the infusion chamber (2), having a main extension (X) and comprising:
a) a first portion (4') in fluidic communication with the infusion chamber (2); and
b) a second portion (4") in fluidic communication with a dispensing nozzle (8) for the drink;
- a valve control member for the dispensing of the infused drink, joined to the exit pipe and movable between:
c) a forward closed position, wherein it prevents the flow of the infused drink from the first (4') to the second portion (4") under a pre-set pressure value; and
d) a rearward open position, wherein it allows the passage of the drink from the first (4') to the second portion (4") above the pre-set pressure value; **characterized in that** it comprises at least a pair of ramifications (6', 6"), suitable for dividing the flow of infused drink coming from the infusion chamber (2) and extending from the second portion (4") upstream of the valve member, when the latter is in the rearward open position.

2. Unit (1) according to claim 1, further comprising an oxygenation hopper (7), receiving the infused drink from the ramifications (6', 6") and shaped so as to slow down the flow speed of the infused drink to oxygenate it.

3. Unit (1) according to claim 2, wherein the hopper (7) is positioned on a plane essentially orthogonal to the passage cross-section along the main extension (X) and below it, so as to receive the infused drink by gravity.

4. Unit (1) according to claim 2 or 3, wherein the hopper (7) has at least one separator (9) suitable for channelling the infused drink along a winding path before feeding it to the dispensing nozzle (8).

5. Unit (1) according to any of the previous claims, wherein the valve member is mobile inside a seat coaxial to the first portion (4').

6. Unit (1) according to any of the previous claims, wherein the ramifications (6', 6") are placed in diametrically opposed positions to the main extension (X).

7. Unit (1) according to any of the previous claims, wherein the passage cross-section of the first portion (4') is smaller than that of the second portion (4") and wherein the valve member comprises a cut-off (10) suitable for engaging the first portion at least partially (4'), when the pressure is below the pre-set value.

8. Unit (1) according to any of the previous claims, wherein the valve member comprises a cut-off (10) and wherein the first (4') and the second portion (4") are separated by a surface essentially orthogonal to the main extension (X), said surface comprising a valve seat (5) against which, below the pre-set pressure value, the cut-off (10) goes in abutment.

9. Unit (1) according to claim 7 or 8, wherein the cut-off (10) has an essentially truncated-cone or hemispherical-shaped contact surface with the valve seat (5).

10. Unit (1) according to any of the claims from 7 to 9, wherein the cut-off (10) is made of a polymer material.

11. unit (1) according to any of the previous claims, wherein the valve member comprises elastic return means, e.g. a spring (11), acting against the pressure of the infusion chamber (2).

12. unit (1) according to claim 11, wherein the extremity of the elastic return means opposite the cut-off (10) rests on a back plate (12) which closes in a removable manner the seat wherein the valve member moves.

13. Unit (1) according to any of the previous claims, wherein the seat wherein the valve member is mobile and the exit pipe are one-piece with the female infuser (3) or with the male infuser.

14. Unit (1) according to any of the previous claims, wherein the ramifications (6', 6") present secondary extensions (Y) angularly distanced in relation to the main extension (X) and incident to it, preferably in an essentially orthogonal manner.

15. Unit (1) according to any of the previous claims, wherein the passage section of each ramification (6', 6") is about the half of the section of the first portion (4').

16. Unit (1) according to any of the previous claims, wherein the passage section of the first portion (4') is about the half of the section of the second portion (4").

## Patentansprüche

1. Ausgabeeinheit (1) zum Beispiel für Kaffeemaschinen der Art, die Hülsen oder Kapseln verwenden, welche aromatische Extrakte enthalten, die umfasst:
- eine Aufgusskammer (2), die durch ein aufnehmendes Aufgusssieb (3) und durch ein aufzunehmendes Aufgusssieb definiert ist, und geeignet ist, für die Herstellung eines Aufgussgetränks unter Druck eine Hülse aufzunehmen;
- wenigstens ein Ausgangsrohr für das Aufgussgetränk aus der Aufgusskammer (2) mit einer Hauptausdehnung (X), das umfasst:
a) einen ersten Abschnitt (4') in Fluidverbindung mit der Aufgusskammer (2); und
b) einen zweiten Abschnitt (4") in Fluidverbindung mit einer Abgabedüse bzw. einer Abgabemündung (8) für das Getränk;
- ein Ventilsteuerelement für die Abgabe des Aufgussgetränks, das mit dem Ausgangsrohr verbunden ist und beweglich ist zwischen:
c) einer vorderen geschlossenen Position, in der es den Fluss des Aufgussgetränks von dem ersten (4') zu dem zweiten Abschnitt (4") unter einem voreingestellten Druckwert verhindert; und
d) einer hinteren offenen Position, in der es den Durchgang des Getränks von dem ersten (4') zu dem zweiten Abschnitt (4") über dem voreingestellten Druckwert zulässt;
**dadurch gekennzeichnet, dass** es wenigstens ein Paar von Verzweigungen (6`, 6") umfasst, die geeignet sind, um den aus der Aufgusskammer (2) kommenden Aufgussgetränkefluss zu unterteilen, und dass es sich von dem zweiten Abschnitt (4") flussaufwärtig von dem Ventilelement erstreckt, wenn das Letztere in der hinteren offenen Position ist.

2. Einheit (1) nach Anspruch 1, die ferner einen Sauerstoffzuführungsschacht (7) umfasst, der das Aufgussgetränk von den Verzweigungen (6', 6") aufnimmt und derart geformt ist, dass er die Fließgeschwindigkeit des Aufgussgetränks verlangsamt, um es mit Sauerstoff anzureichern.

3. Einheit (1) nach Anspruch 2, wobei der Schacht (7) auf einer Ebene positioniert ist, die im Wesentlichen orthogonal zu dem Durchgangsquerschnitt entlang der Hauptausdehnung (X) und unterhalb von ihr positioniert ist, um das Aufgussgetränk durch die Schwerkraft aufzunehmen.

4. Einheit (1) nach Anspruch 2 oder 3, wobei der Schacht (7) wenigstens eine Abscheidevorrichtung (9) hat, die geeignet ist, um das Aufgussgetränk entlang eines gewundenen Wegs zu kanalisieren, bevor es in die Abgabemündung (8) zugeführt wird.

5. Einheit (1) nach einem der vorhergehenden Ansprüche, wobei das Ventilelement im Inneren eines mit dem ersten Abschnitt (4') koaxialen Sitzes beweglich ist.

6. Einheit (1) nach einem der vorhergehenden Ansprüche, wobei die Verzweigungen (6, 6") in diametral entgegengesetzten Positionen zu der Hauptausdehnung (X) angeordnet sind.

7. Einheit (1) nach einem der der vorhergehenden Ansprüche, wobei der Durchgangsquerschnitt des ersten Abschnitts (4') kleiner als der des zweiten Abschnitts (4") ist, und wobei das Ventilelement eine Absperreinrichtung (10) umfasst, die geeignet ist, wenigstens teilweise in den ersten Abschnitt (4') einzugreifen, wenn der Druck unter dem voreingestellten Wert ist.

8. Einheit (1) nach einem der vorhergehenden Ansprüche, wobei das Ventilelement eine Absperreinrichtung (10) umfasst und wobei der erste (4') und der zweite Abschnitt (4") durch eine Oberfläche, die im Wesentlichen orthogonal zu der Hauptausdehnung (X) ist, getrennt sind, wobei die Oberfläche einen Ventilsitz (5) umfasst, gegen den die Absperreinrichtung (10) unterhalb des voreingestellten Druckwerts anliegt.

9. Einheit (1) nach Anspruch 7 oder 8, wobei die Absperreinrichtung (10) eine im Wesentlichen kegelstumpfförmige oder halbkugelförmige Kontaktoberfläche mit dem Ventilsitz (5) hat.

10. Einheit (1) nach einem der Ansprüche von 7 bis 9, wobei die Absperreinrichtung (10) aus Polymermaterial gefertigt ist.

11. Einheit (1) nach einem der vorhergehenden Ansprüche, wobei das Ventilelement elastische Rückstellmittel, z.B. eine Feder (11), umfasst, die gegen den Druck der Aufgusskammer (2) wirkt.

12. Einheit (1) nach Anspruch 11, wobei das äußerste Ende des elastischen Rückstellmittels entgegengesetzt zu der Absperreinrichtung (10) auf einer Rückplatte (12) ruht, die den Sitz in dem sich das Ventilelement bewegt, in einer lösbaren Weise schließt.

13. Einheit (1) nach einem der vorhergehenden Ansprüche, wobei der Sitz, in dem das Ventilelement beweglich ist, und das Ausgangsrohr ein Stück mit dem aufnehmenden Aufgusssieb (3) oder mit dem aufzunehmenden Aufgusssieb sind.

14. Einheit (1) nach einem der vorhergehenden Ansprüche, wobei die Verzweigungen (6`, 6") sekundäre Ausläufer (Y) darstellen, die in Bezug auf die Hauptausdehnung (X) winkelig beabstandet sind und bevorzugt in einer orthogonalen Weise auf sie eintreffen.

15. Einheit (1) nach einem der vorhergehenden Ansprüche, wobei der Durchgangsquerschnitt jeder Verzweigung (6', 6") etwa die Hälfte des Querschnitts des ersten Abschnitts (4') ist.

16. Einheit (1) nach einem der vorhergehenden Ansprüche, wobei der Durchgangsquerschnitt des ersten Abschnitts (4') etwa die Hälfte des Querschnitts des zweiten Abschnitts (4") ist.

## Revendications

1. Unité de distribution (1), par exemple pour des machines à café du type utilisant des dosettes ou des capsules contenant des extraits aromatiques, comprenant:
- une chambre d'infusion (2), définie par un dispositif d'infusion femelle (3) et par un dispositif d'infusion mâle et appropriée pour loger une dosette pour la production sous pression d'une boisson infusée;
- au moins un tuyau de sortie pour la boisson infusée à partir de la chambre d'infusion (2), possédant un axe principal (X) et comprenant:
a) une première partie (4') en communication fluidique avec la chambre d'infusion (2); et
b) une seconde partie (4") en communication fluidique avec une buse de distribution (8) pour la boisson;
- un élément de clapet de commande pour la distribution de la boisson infusée, joint au tuyau de sortie et mobile entre:
c) une position fermée avant, dans laquelle il empêche l'écoulement de la boisson infusée de la première (4') à la seconde partie (4"), sous une valeur de pression prédéterminée; et
d) une position ouverte arrière, dans laquelle il permet le passage de la boisson de la première (4') à la seconde partie (4"), au-dessus de la valeur de pression prédéterminée;
**caractérisée en ce qu'**il comprend au moins une paire de ramifications (6', 6"), appropriées pour diviser l'écoulement de boisson infusée provenant de la chambre d'infusion (2) et s'étendent à partir de la seconde partie (4") en amont de l'élément de clapet, lorsque ce dernier est dans la position ouverte arrière.

2. Unité (1) selon la revendication 1, comprenant en outre une trémie d'oxygénation (7), recevant la boisson infusée à partir des ramifications (6', 6") et formée afin de ralentir la vitesse d'écoulement de la boisson infusée pour l'oxygéner.

3. Unité (1) selon la revendication 2, dans laquelle la trémie (7) est positionnée sur un plan essentiellement orthogonal à la section transversale de passage le long de l'axe principal (X) et en dessous de celui-ci, afin de recevoir la boisson infusée par gravité.

4. Unité (1) selon la revendication 2 ou 3, dans laquelle la trémie (7) comporte au moins un séparateur (9) approprié pour canaliser la boisson infusée le long d'un trajet sinueux avant de la fournir à la buse de distribution (8).

5. Unité (1) selon une quelconque des revendications précédentes, dans laquelle l'élément de clapet est mobile à l'intérieur d'un siège coaxial à la première partie (4').

6. Unité (1) selon une quelconque des revendications précédentes, dans laquelle les ramifications (6', 6") sont placées dans des positions diamétralement opposées par rapport à l'axe principal (X).

7. Unité (1) selon une quelconque des revendications précédentes, dans laquelle la section transversale de passage de la première partie (4') est inférieure à celle de la seconde partie (4") et dans laquelle l'élément de clapet comprend un élément de coupure (10) approprié pour entrer en prise avec la première partie (4') au moins partiellement, lorsque la pression est inférieure à la valeur prédéterminée.

8. Unité (1) selon une quelconque des revendications précédentes, dans laquelle l'élément de clapet comprend un élément de coupure (10) et dans laquelle la première (4') et la seconde partie (4") sont séparées par une surface essentiellement orthogonale à l'axe principal (X), ladite surface comprenant un siège de clapet (5) contre lequel, en dessous de la valeur de pression prédéterminée, l'élément de coupure (10) se met en butée.

9. Unité (1) selon la revendication 7 ou 8, dans laquelle l'élément de coupure (10) comporte une surface de contact essentiellement de forme tronconique ou hémisphérique avec le siège de clapet (5).

10. Unité (1) selon une quelconque des revendications 7 à 9, dans laquelle l'élément de coupure (10) est fait d'un matériau polymère.

11. Unité (1) selon une quelconque des revendications précédentes, dans laquelle l'élément de clapet comprend des moyens de rappel élastique, par exemple un ressort (11), agissant contre la pression de la chambre d'infusion (2).

12. Unité (1) selon la revendication 11, dans laquelle l'extrémité des moyens de rappel élastique en face de l'élément de coupure (10) repose sur une plaque arrière (12) qui ferme de manière amovible le siège dans lequel l'élément de clapet se déplace.

13. Unité (1) selon une quelconque des revendications précédentes, dans laquelle le siège dans lequel l'élément de clapet est mobile et le tuyau de sortie sont monoblocs avec le dispositif d'infusion femelle (3) ou avec le dispositif d'infusion mâle.

14. Unité (1) selon une quelconque des revendications précédentes, dans laquelle les ramifications (6', 6") présentent des axes secondaires (Y) éloignés de façon angulaire par rapport à l'axe principal (X) et incidents par rapport à celui-ci, de préférence de manière essentiellement orthogonale.

15. Unité (1) selon une quelconque des revendications précédentes, dans laquelle la section de passage de chaque ramification (6', 6") est environ la moitié de la section de la première partie (4').

16. Unité (1) selon une quelconque des revendications précédentes, dans laquelle la section de passage de la première partie (4') est environ la moitié de la section de la seconde partie (4").
